# EUROPEAN PATENT APPLICATION

(11) **EP 4 113 435 A1**
(43) Date of publication of application: **04.01.2023**
(21) Application number: 21760506.2
(22) Date of filing: 29.01.2021
(51) Int. Cl.: G06T 7/00, G06F 16/75, G06N 20/00, H04N 21/235, H04N 21/84

(54) **ESTIMATION DEVICE, ESTIMATION METHOD, AND ESTIMATION SYSTEM**

(30) Priority: 27.02.2020 JP 2020031540
(71) Applicant: Panasonic Intellectual Property Management Co., Ltd., Osaka-shi, Osaka 540-6207 (JP)
(72) Inventor: SUGIMOTO, Takashi, Osaka-shi, Osaka 540-6207 (JP); UEDA, Isao, Osaka-shi, Osaka 540-6207 (JP); MOCHINAGA, Kazuhiro, Osaka-shi, Osaka 540-6207 (JP); MATSUSHITA, Yuto, Osaka-shi, Osaka 540-6207 (JP)
(74) Representative: Grünecker Patent- und Rechtsanwälte PartG mbB
(86) International application number: PCT/JP2021/003195
(87) International publication number: WO 2021/171900

(57) **Abstract**

An estimation device (10) includes: an obtainer (11) that obtains first content associated with a first time and second content associated with a second time, the second time preceding the first time by a predetermined amount of time; a determiner (12) that, by applying first processing for determining a type of content to each of the first content and the second content, obtains first type information indicating a type of the first content and second type information indicating a type of the second content; a calculator (14) that, using the first type information and the second type information, calculates confidence level information indicating a confidence level of the first type information; and an outputter (15) that, using the confidence level information calculated by the calculator (14), outputs specifying information specifying the type of the first content derived from the first type information.

## Description

### [Technical Field]

The present disclosure relates to an estimation device, an estimation method, and an estimation system.

### [Background Art]

There is a conventional technique which classifies scenes by analyzing the features of images contained in moving image data (see PTL 1).

### [Citation List]

### [Patent Literature]

[PTL 1] Japanese Unexamined Patent Application Publication No. 2006-277232

### [Summary of Invention]

### [Technical Problem]

However, there is a problem in that simply analyzing the features of images can result in errors when estimating the type of the content.

Accordingly, the present disclosure provides an estimation device that suppresses errors when estimating the type of content.

### [Solution to Problem]

An estimation device according to the present disclosure includes: an obtainer that obtains first content associated with a first time and second content associated with a second time, the second time preceding the first time by a predetermined amount of time; a first determiner that, by applying first processing for determining a type of content to each of the first content and the second content, obtains first type information indicating a type of the first content and second type information indicating a type of the second content; a first calculator that, using the first type information and the second type information, calculates confidence level information indicating a confidence level of the first type information; and an outputter that, using the confidence level information calculated by the first calculator, outputs specifying information specifying the type of the first content derived from the first type information.

According to the foregoing aspect, the estimation device outputs information indicating the type of the first content as the estimation result, taking into account not only the type of the first content, for which the type of the content is to be estimated, but also the type of the second content, which is associated with a time preceding the time associated with the first content by a predetermined amount of time. Accordingly, errors in the estimation can be suppressed even when estimating the type of the first content only from the first content. In this manner, the estimation device of the present disclosure can suppress errors when estimating the type of content.

Additionally, the first type information may include a first probability that is a probability of the first content being classified as a predetermined type; the second type information may include a second probability that is a probability of the second content being classified as the predetermined type, and the first calculator may calculate the confidence level information which includes, as the confidence level, an average value of the first probability and the second probability.

According to the foregoing aspect, the estimation device estimates the type of the first content using a confidence level calculated using an average value of the probabilities that the first content and the second content will be classified as each of a plurality of types. Through this, if a type which the first content has a high probability of being classified as is the same as a type which the second content has a high probability of being classified as are the same, a higher value is calculated as the confidence level for that type. As a result, the estimation device performs control such that a type which the first content and the second content both have a high probability of being classified as is the result of estimating the type of the first content. In this manner, the estimation device of the present disclosure can further suppress errors when estimating the type of content.

Additionally, the second content may include a plurality of items of content different from the first content; and the first calculator may calculate the confidence level information which includes, as the confidence level, a moving average value of (i) a probability of each of the plurality of items of content being classified as the predetermined type and (ii) the first probability.

According to the foregoing aspect, by using a moving average for the second content (i.e., the plurality of items of content), the estimation device performs the control using a relatively new item of the second content, which makes it possible to improve the accuracy of estimating the type of the first content. In this manner, the estimation device of the present disclosure can further suppress errors when estimating the type of content.

Additionally, the second content may include a plurality of items of content different from the first content; and the first calculator may calculate the confidence level information which includes, as the confidence level, a weighted moving average value of (i) a probability of each of the plurality of items of content being classified as the predetermined type and (ii) the first probability, the weighted moving average value having greater weights given to times associated with newer items of content among the plurality of items of content.

According to the foregoing aspect, by using a weighted moving average for the second content (i.e., the plurality of items of content), the estimation device performs the control using a relatively new item of the second content and while increasing the weight of relatively new items, which makes it possible to improve the accuracy of estimating the type of the first content. In this manner, the estimation device of the present disclosure can further suppress errors when estimating the type of content. Note that a weighted average may be used in which the second content includes the first content having a greater weight for relatively new items of content.

Additionally, the estimation device may further include: a second determiner that, by applying second processing for determining a type of content to each of the first content and the second content, obtains third type information indicating the type of the first content and fourth type information indicating the type of the second content, the second processing being different from the first processing; and a second calculator that, based on a relationship between the third type information and the fourth type information, calculates second confidence level information of the third type information; and the outputter may output the specifying information specifying the type of the first content derived from at least one of the first type information or the third type information, using first confidence level information that is the confidence level information calculated by the first calculator and the second confidence level information calculated by the second calculator.

According to the foregoing aspect, the estimation device outputs information indicating the type of the first content as the estimation result, taking into account the types of the first content and the second content as determined through the second processing in addition to the types of the first content and the second content as determined through the first processing. Accordingly, errors in the estimation can be suppressed even when estimating the type of the first content using only the first processing. In this manner, the estimation device of the present disclosure can suppress errors when estimating the type of content.

Additionally, the first processing may include processing of obtaining type information output by inputting content into a recognition model constructed by machine learning, and the second processing may include processing of obtaining type information by analyzing a feature of content.

According to the foregoing aspect, the estimation device determines the type of the content using a determination of the type of the content made using a recognition model and a determination of the type of the content using an analysis of features of the content. Through this, the estimation device of the present disclosure can suppress errors when estimating the type of content.

Additionally, the second processing may include at least one of processing of detecting a line of sight of a person included in video of content subjected to the second processing, processing of detecting motion of an object included in video of content subjected to the second processing, processing of detecting a specific sound included in sound of content subjected to the second processing, or processing of detecting a pattern of an object included in video of content subjected to the second processing.

According to the foregoing aspect, the estimation device determines the type of the content using at least one of processing of detecting a line of sight of a person included in the content, processing of detecting motion of an object included in the content, processing of detecting sound included in the content, and processing of detecting a pattern of an object included in the content, for the content subjected to the second processing. Through this, the estimation device of the present disclosure can more easily suppress errors when estimating the type of content.

Additionally, the second determiner may further perform control to prohibit the first processing from being executed by the first determiner in accordance with the feature of the content analyzed by the second processing.

According to the foregoing aspect, the estimation device can also reduce the amount of information processing and power consumption of the CPU by not using the recognition model to determine the type of content when the content type is determined by analysis.

Additionally, an estimation method according to the present disclosure includes: obtaining first content associated with a first time; obtaining, before the obtaining of the first content, second content associated with a second time, the second time preceding the first time by a predetermined amount of time; obtaining first type information indicating a type of the first content by applying first processing for determining a type of content to the first content; obtaining, before the obtaining of the first content, second type information indicating a type of the second content by applying the first processing to the second content; calculating, using the first type information and the second type information, confidence level information indicating a confidence level of the first type information; and outputting, using the confidence level information calculated in the calculating, specifying information specifying the type of the first content derived from the first type information.

This aspect provides the same effects as the above-described estimation device.

Additionally, an estimation system according to the present disclosure includes a content server that holds content, an estimation device, and a presenting apparatus that presents the content. The estimation device includes: an obtainer that obtains, over a communication line and from the content server, first content associated with a first time and second content associated with a second time, the second time preceding the first time by a predetermined amount of time; a first determiner that, by applying first processing for determining a type of content to each of the first content and the second content, obtains first type information indicating a type of the first content and second type information indicating a type of the second content; a first calculator that, using the first type information and the second type information, calculates confidence level information indicating a confidence level of the first type information; and an outputter that, using the confidence level information calculated by the first calculator, outputs specifying information specifying the type of the first content derived from the first type information. The presenting apparatus obtains the specifying information over the communication line from the estimation device, and controls presenting of the content using the specifying information obtained.

This aspect provides the same effects as the above-described estimation device.

Note that these comprehensive or specific aspects may be realized by a system, a device, an integrated circuit, a computer program, or a computer-readable recording medium such as a CD-ROM, or may be implemented by any desired combination of systems, devices, integrated circuits, computer programs, and recording media.

### [Advantageous Effects of Invention]

The estimation device of the present disclosure can suppress errors when estimating the type of content.

### [Brief Description of Drawings]

[FIG. 1]

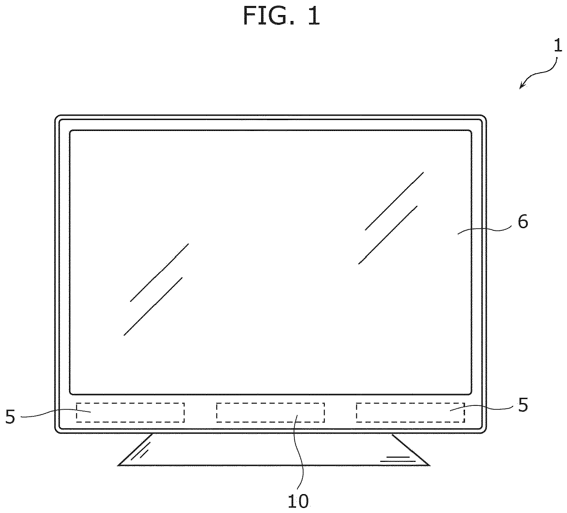

   FIG. 1 is a descriptive diagram illustrating an example of the external appearance of a device including the estimation device according to Embodiment 1.
[FIG. 2]

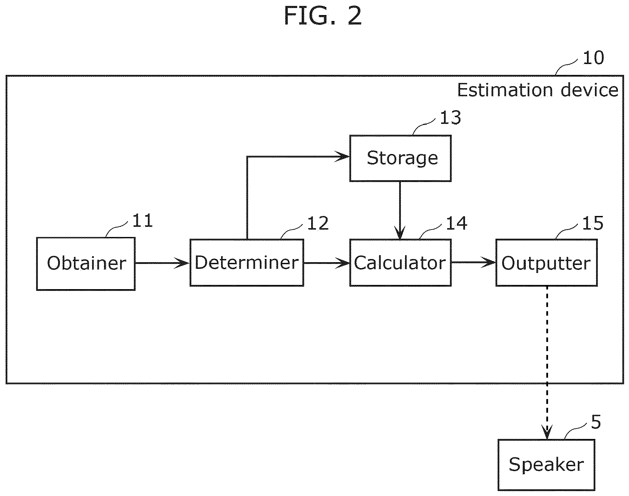

   FIG. 2 is a block diagram illustrating the functional configuration of the estimation device according to Embodiment 1.
[FIG. 3]

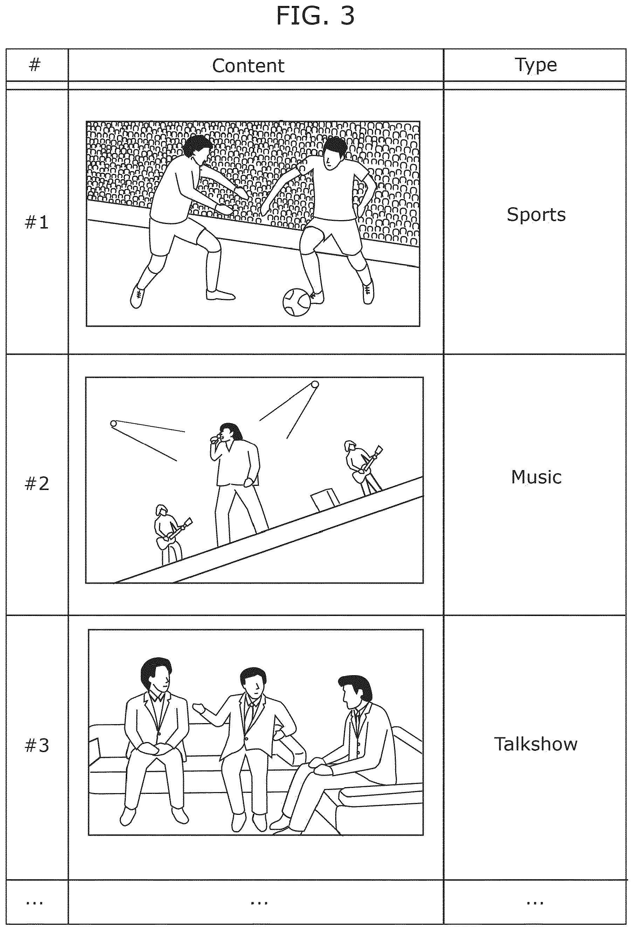

   FIG. 3 is a descriptive diagram illustrating an example of training data used in training for type determination performed by a determiner, according to Embodiment 1.
[FIG. 4]

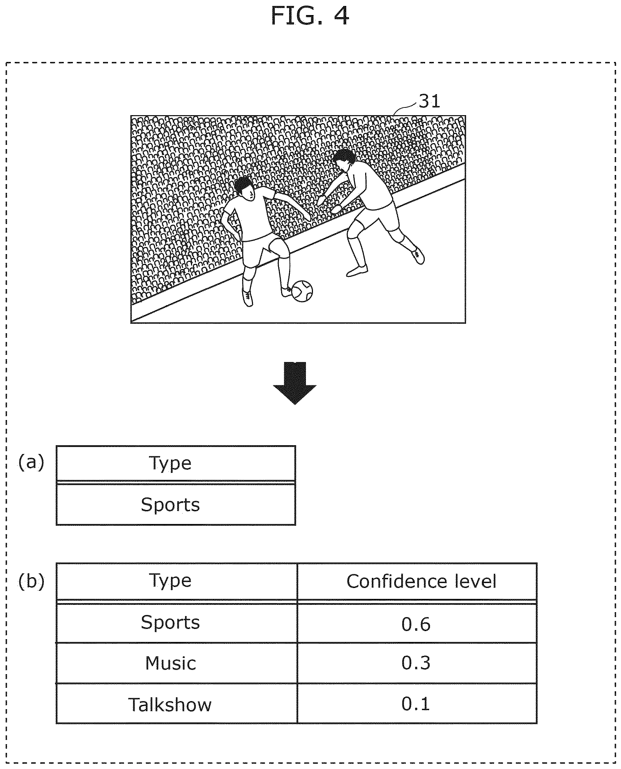

   FIG. 4 is a descriptive diagram illustrating the type determination performed by the determiner according to Embodiment 1.
[FIG. 5]

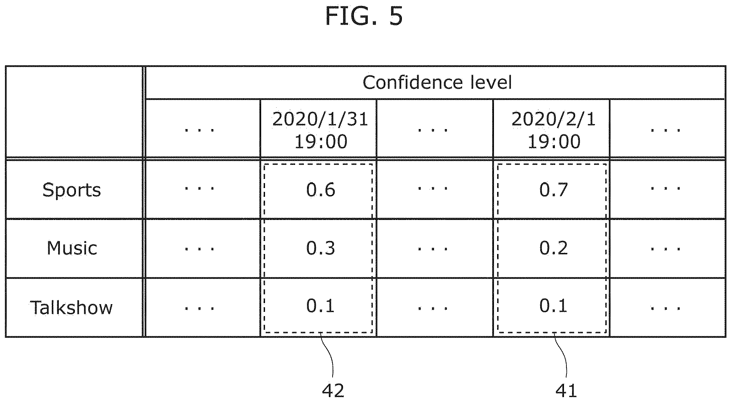

   FIG. 5 is a descriptive diagram illustrating an example of type information indicating results of past type determinations according to Embodiment 1.
[FIG. 6]

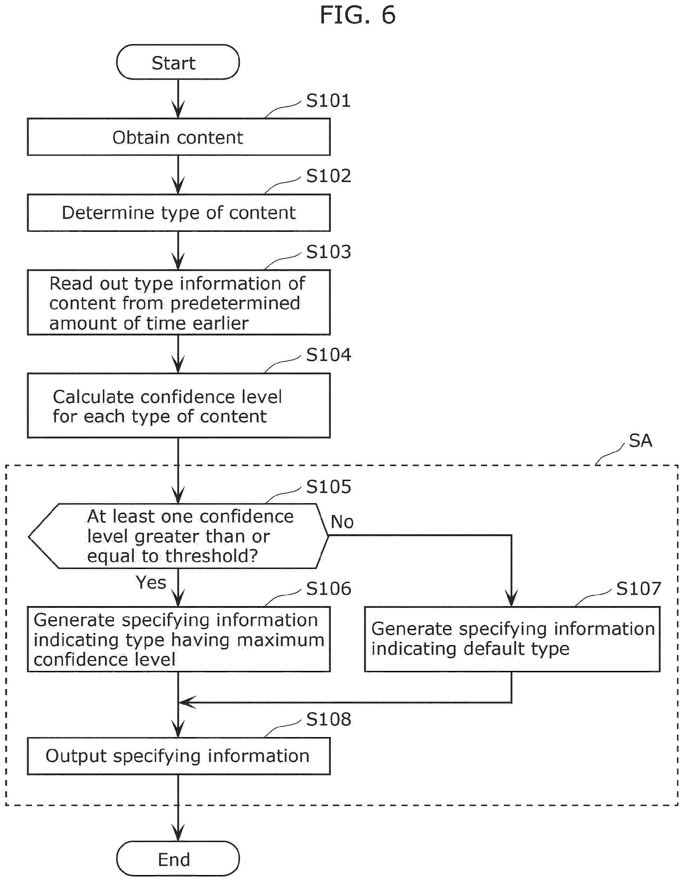

   FIG. 6 is a flowchart illustrating type determination processing by the estimation device according to Embodiment 1.
[FIG. 7]

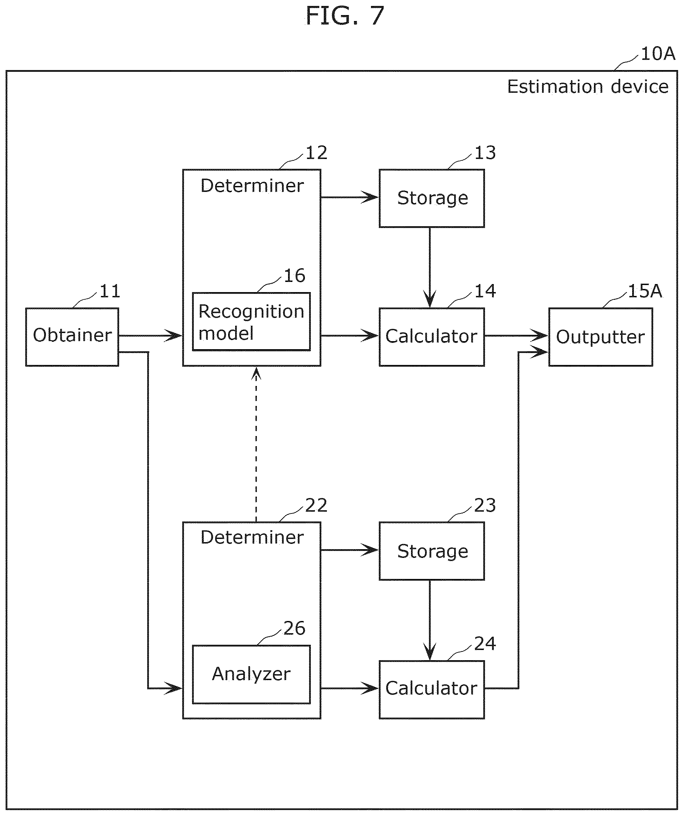

   FIG. 7 is a block diagram illustrating the functional configuration of an estimation device according to Embodiment 2.
[FIG. 8]

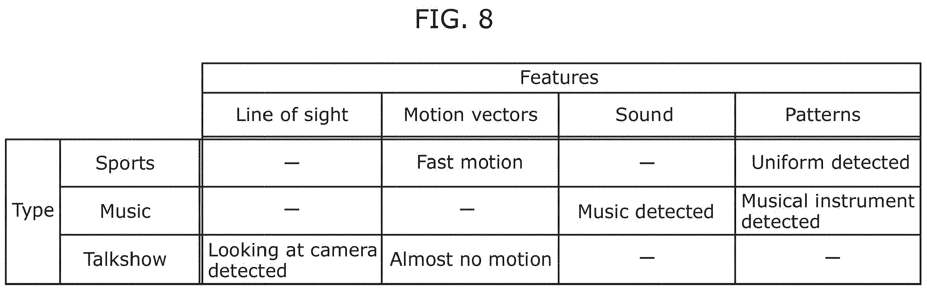

   FIG. 8 is a descriptive diagram illustrating an example of features used in the type determination performed by a determiner according to Embodiment 2.
[FIG. 9]

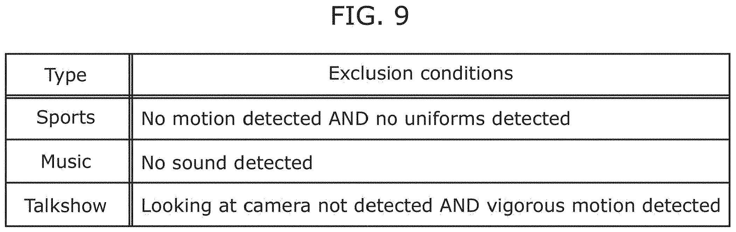

   FIG. 9 is a descriptive diagram illustrating an example of conditions used in the type determination performed by the determiner according to Embodiment 2.
[FIG. 10]

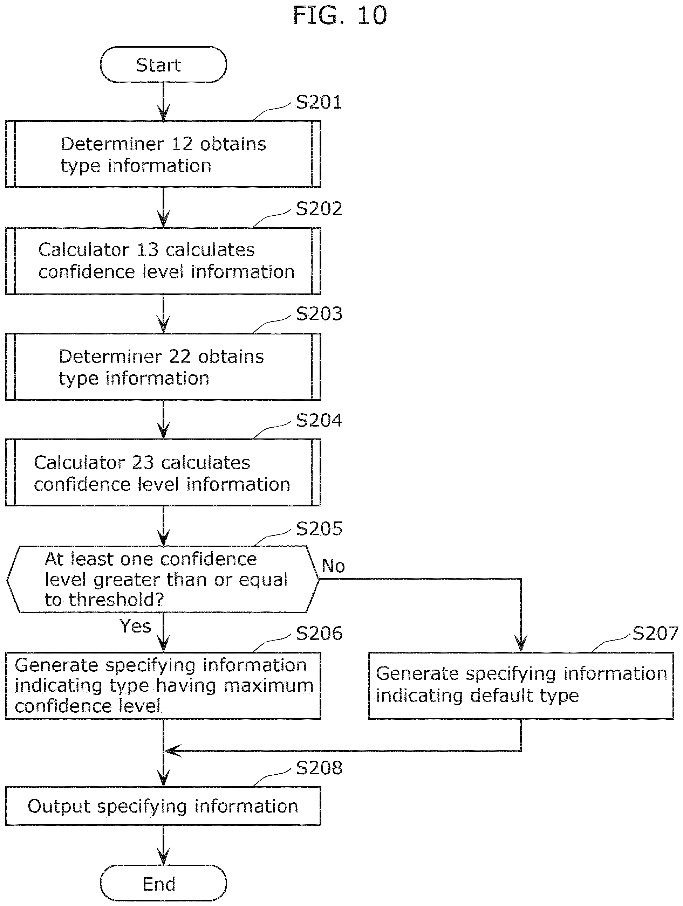

   FIG. 10 is a flowchart illustrating processing executed by the estimation device according to Embodiment 2.
[FIG. 11]

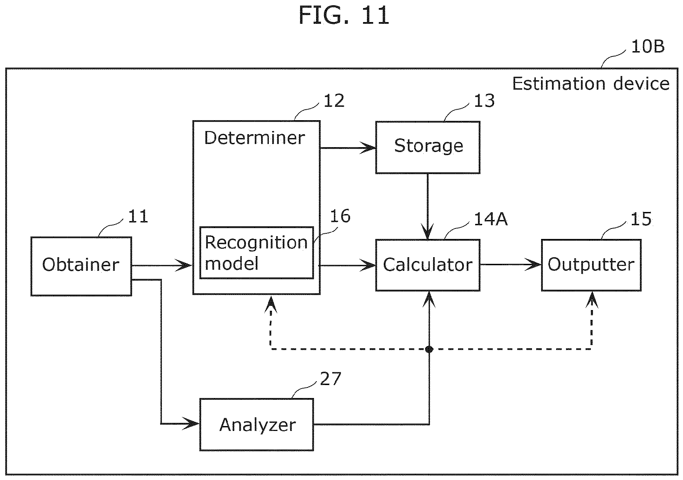

   FIG. 11 is a block diagram illustrating the functional configuration of an estimation device according to Embodiment 3.
[FIG. 12]

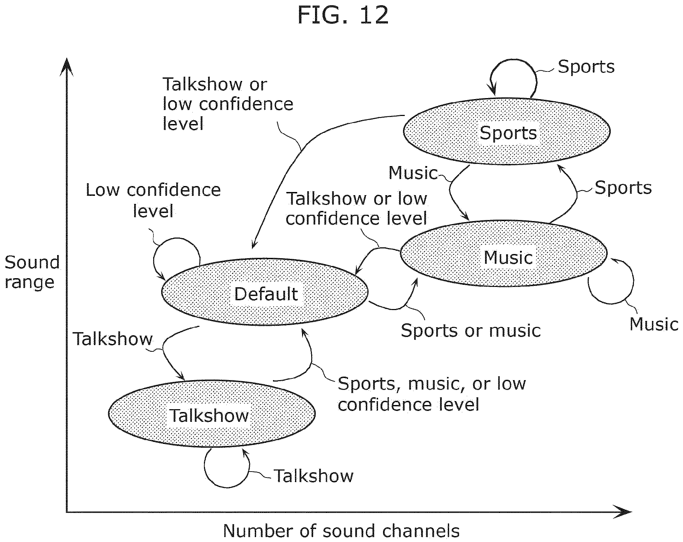

   FIG. 12 is a descriptive diagram illustrating transitions related to type changes according to Embodiment 4.
[FIG. 13]

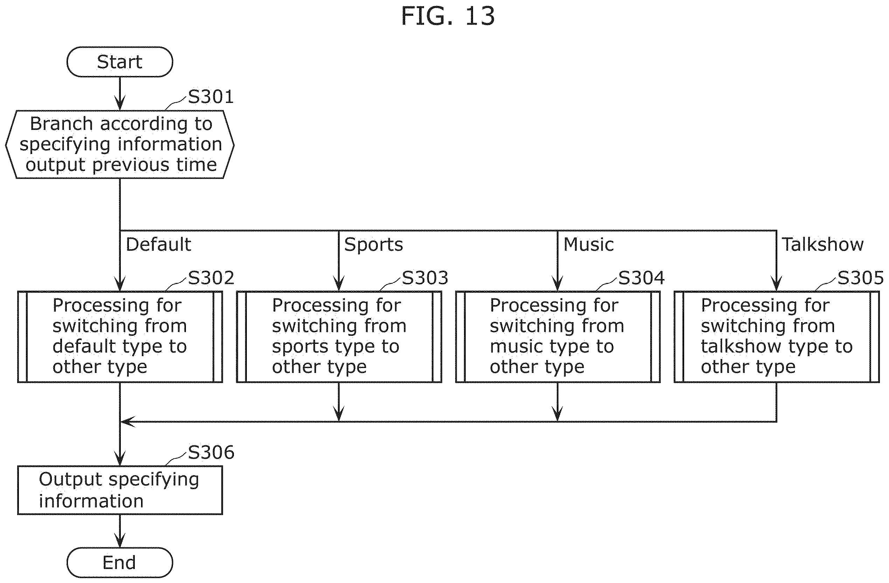

   FIG. 13 is a first flowchart illustrating processing executed by an outputter according to Embodiment 4.
[FIG. 14]

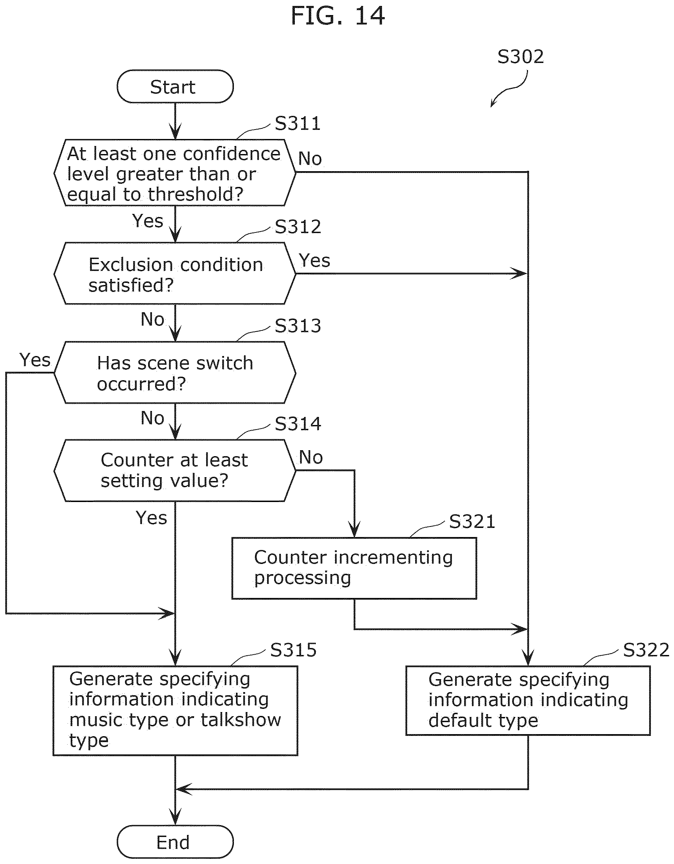

   FIG. 14 is a second flowchart illustrating processing executed by the outputter according to Embodiment 4.
[FIG. 15]

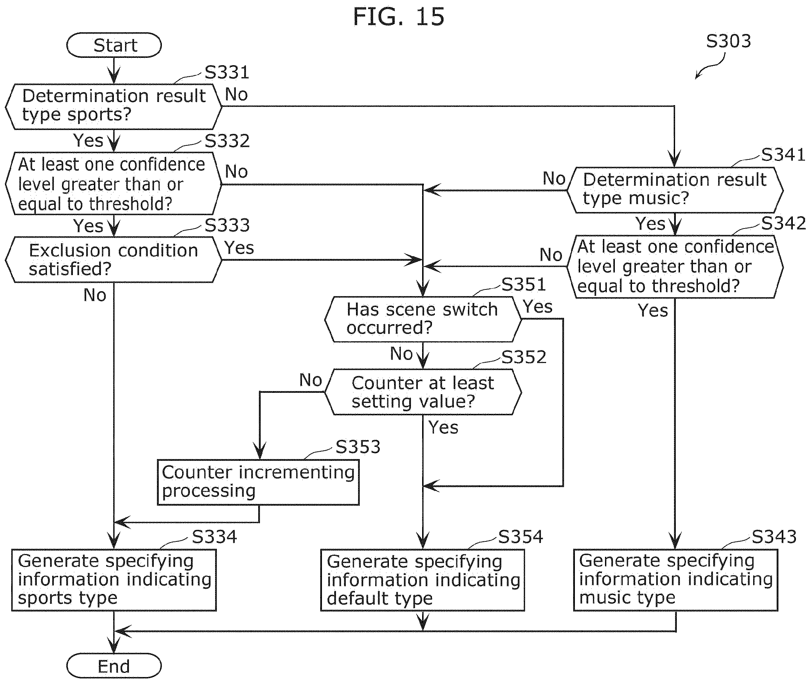

   FIG. 15 is a third flowchart illustrating processing executed by the outputter according to Embodiment 4.
[FIG. 16]

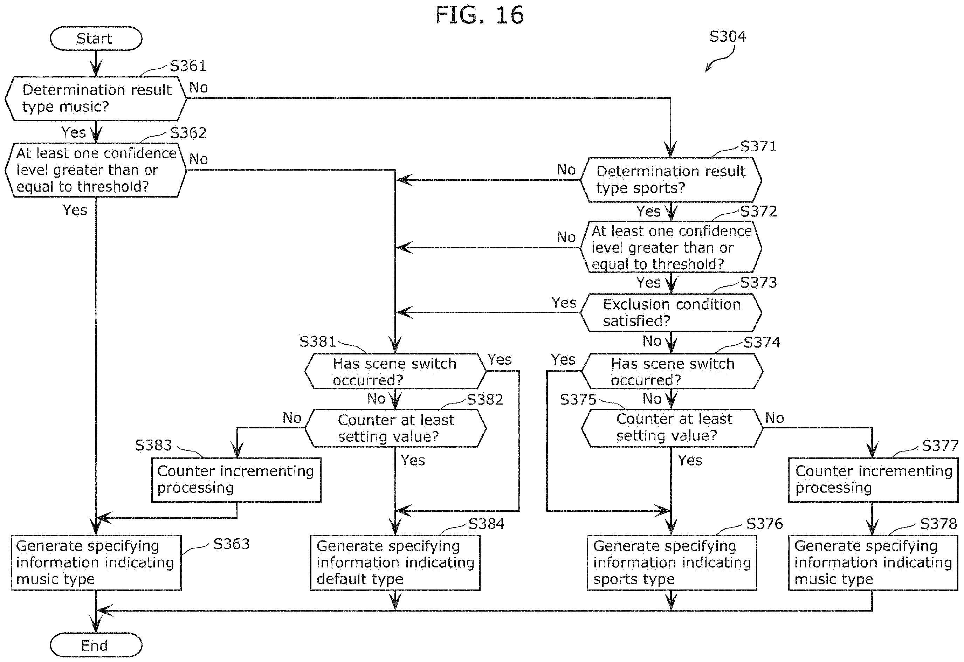

   FIG. 16 is a fourth flowchart illustrating processing executed by the outputter according to Embodiment 4.
[FIG. 17]

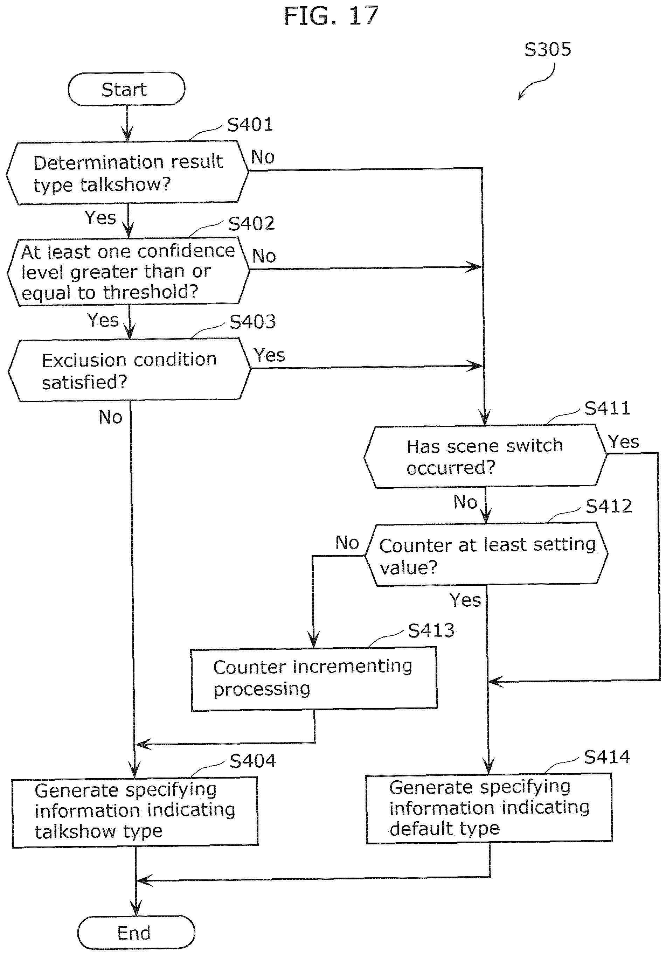

   FIG. 17 is a fifth flowchart illustrating processing executed by the outputter according to Embodiment 4.
[FIG. 18]

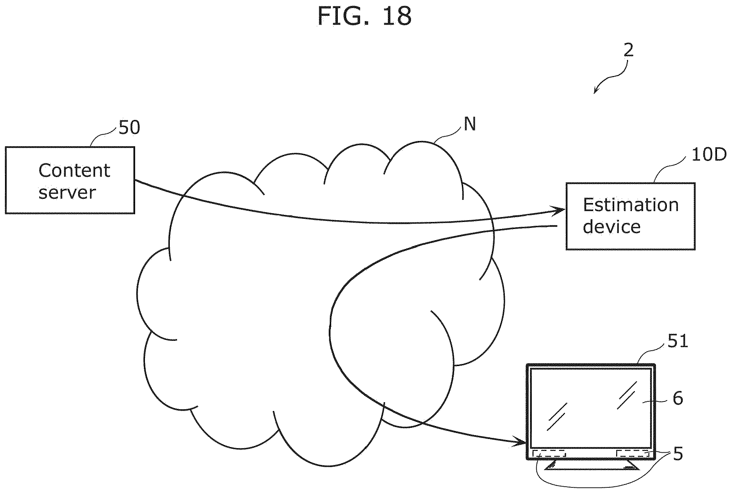

   FIG. 18 is a descriptive diagram illustrating the functional configuration of an estimation system according to a variation on the embodiments.

### [Description of Embodiments]

Embodiments will be described in detail hereinafter with reference to the drawings where appropriate. There are, however, cases where descriptions are omitted when further detail is not necessary. For example, detailed descriptions of matters which are already well-known, redundant descriptions of substantially identical configurations, and so on may be omitted. This is to avoid unnecessary redundancy in the descriptions and facilitate understanding for those skilled in the art.

Note that the inventor(s) have provided the accompanying drawings and the following descriptions primarily so that those skilled in the art can sufficiently understand the present disclosure, and as such the content of the scope of claims is not intended to be limited by the drawings and descriptions in any way.

### [Embodiment 1]

The present embodiment will describe an estimation device and the like that suppress errors in the estimation of a type of content.

FIG. 1 is a descriptive diagram illustrating an example of the external appearance of television receiver 1 including estimation device 10 according to the present embodiment. Television receiver 1 illustrated in FIG. 1 receives broadcast waves containing content that includes sound and video, and presents the sound and video included in the content. Television receiver 1 includes a tuner (not shown), speaker 5, and screen 6, outputs sound, which is obtained from a signal contained in the broadcast wave through the tuner, from speaker 5, and displays an image, which is obtained from a signal contained in the broadcast wave through the tuner, to screen 6. Note that the content contains data, signals, and the like of a given time length, including at least video. The content may be data of a given time length including sound and video, and may further include metadata. The time length of the content is at least a time equivalent to one frame of the video, and is a time no greater than several seconds to several hours. The metadata may include Service Information (SI).

Although a case where estimation device 10 is included in television receiver 1 is described as an example, the configuration is not limited thereto, and estimation device 10 may be provided in a recorder that receives broadcast waves and stores content.

Estimation device 10 obtains the broadcast wave received by television receiver 1, and estimates, for content obtained from a signal included in the broadcast wave, which type the content is, from among a predetermined plurality of types. Estimation device 10 may simply output information indicating an estimation result, or may control television receiver 1 based on the information indicating the estimation result.

For example, "sports", "music", "talkshow", and the like are included in the predetermined plurality of types of content.

For example, estimation device 10 changes an acoustic effect of speaker 5 included in television receiver 1 by controlling speaker 5 based on the type obtained as the estimation result. When, for example, the type of the content is estimated to be "sports", estimation device 10 performs the control to make the spread of the sound relatively broad and produce an effect that the viewer feels enveloped by the sound. When the type of the content is estimated to be "music", estimation device 10 performs the control to make the spread of the source relatively broad and produce an effect that vocalists' voices are emphasized. When the type of the content is estimated to be "talkshow", estimation device 10 performs the control to produce an effect that makes it easier for the viewer to hear the voice of the speaker.

FIG. 2 is a block diagram illustrating the functional configuration of estimation device 10 according to the present embodiment.

As illustrated in FIG. 2, estimation device 10 includes obtainer 11, determiner 12, storage 13, calculator 14, and outputter 15. Note that the functional units of estimation device 10 can be realized by a Central Processing Unit (CPU) executing a predetermined program using memory.

Obtainer 11 is a functional unit that obtains content. Obtainer 11 sequentially obtains the content obtained by television receiver 1. A time is associated with the content obtained by obtainer 11, and a time at which the content is broadcast is an example of the associated time. Obtainer 11 provides the obtained content to determiner 12.

The content obtained by obtainer 11 includes at least target content (corresponding to first content), which is content subject to type estimation, and reference content (corresponding to second content), which is content associated with a time that precedes the target content by a predetermined amount of time.

The predetermined amount of time can be an amount of time that can be used as a cycle in a person's daily life, or in other words, an amount of time determined in advance as a unit of time at which similar actions are repeated in the person's daily life. The predetermined amount of time may be, for example, one minute, one hour, one day, one week, one month, one year, or the like, or may be increased or reduced by approximately 10% of that time. Additionally, content that precedes the reference content by a predetermined amount of time may be included in the reference content. In other words, there may be at least one item of reference content, and in such a case, content associated with a time N (where N is a natural number) times the predetermined amount of time in the past from the time associated with the target content is the reference content.

An amount of time corresponding to one frame of the content (e.g., when the framerate is 60 fps, 1/60 seconds) can be used as the predetermined amount of time. In this case, the content of the frame immediately before the target content is the reference content. The following will describe a case where the predetermined amount of time is one day as an example.

Determiner 12 is a functional unit that performs processing for determining the type of the content. By applying first processing for determining the type of the content to each of the target content and the reference content, determiner 12 obtains first type information indicating the type of the target content, and second type information indicating the type of the reference content. Note that determiner 12 is also called a "first determiner".

Processing for determining the type of the content using a recognition model constructed using machine learning (processing using what is known as Artificial Intelligence (AI)) is an example of the processing performed by determiner 12, and such a case will be described as an example, but the processing is not limited thereto. Determiner 12 holds a recognition model constructed through appropriate machine learning, and takes, as a determination result, type information of the content obtained by obtainer 11, the type information being output when the content is input to the recognition model.

The recognition model is a recognition model for recognizing the type of the content. The recognition model is a recognition model constructed in advance through machine learning by using supervisory data containing at least one combination of a single item of content and the type of that single item of content. The recognition model is, for example, a neural network model, and more specifically, is a convolutional neural network model (CNN). When the recognition model is a convolutional neural network model, the recognition model is constructed by determining coefficients (weights) of a filter in a convolutional layer based on features such as images, sounds, or the like contained in the content through machine learning based on the supervisory data.

Storage 13 is a storage device that temporarily stores the type information indicating the result of the determination by determiner 12. Specifically, storage 13 stores the second type information of the reference content. The stored second type information is read out by calculator 14.

Calculator 14 is a functional unit that calculates confidence level information of the first type information using the first type information and the second type information. Calculator 14 obtains the first type information of the target content from determiner 12, and obtains the second type information of the reference content from storage 13. Calculator 14 then calculates the confidence level information of the first type information using the first type information and the second type information. Here, the confidence level information is an indicator of how reliable the first type information calculated by calculator 14 is as information indicating the type of the content obtained by obtainer 11. The confidence level being high or low may be expressed as "high confidence level" and "low confidence level", respectively.

Outputter 15 is a functional unit that outputs the estimation result for the target content. Specifically, outputter 15 outputs, as the estimation result, specifying information specifying the type of the target content derived from the first type information, using the confidence level information calculated by calculator 14. Note that if the target content does not correspond to a predetermined type, specifying information indicating a default type is generated and output. The default type specifying information is specifying information indicating that the content does not correspond to any of the predetermined plurality of types.

Note that outputter 15 outputting the specifying information includes simply outputting the specifying information, and also includes controlling television receiver 1 using the specifying information. For example, outputter 15 controls speaker 5 to produce an acoustic effect corresponding to the type of the content specified by the specifying information.

For example, with respect to determiner 12, the first type information may include a first probability, which is a probability of the target content being classified as a predetermined type. The second type information may include a second probability, which is a probability of the reference content being classified as the predetermined type. In this case, calculator 14 may calculate the confidence level information so as to include an average value of the first probability and the second probability as the confidence level. Note that when a plurality of items of the reference content are present, the "second probability" in the foregoing is a plurality of second probabilities including the second probability for respective ones of the plurality of items of reference content.

Additionally, the reference content may include a plurality of items of content different from the target content. In this case, calculator 14 may calculate the confidence level information which includes, as the confidence level, a moving average value of a probability of each of the plurality of items of content being classified as the predetermined type and the first probability.

Additionally, in the foregoing case, calculator 14 may calculate the confidence level information which includes, as the confidence level, a weighted moving average value, in which times associated with newer items of content among the plurality of items of content are given greater weights, of a probability of each of the plurality of items of content being classified as the predetermined type and the first probability.

When a time that can be used as a cycle in a person's daily life is used as the predetermined amount of time as described above, the estimation device determines the type using the first content and the second content separated by the predetermined amount of time used as a cycle in a person's daily life. The content is separated by the time of a cycle in a person's daily life, and thus the probability that the first content and the second content are of the same type is relatively high. Accordingly, the accuracy of the estimation of the type of the first content can be improved.

The following will describe, in detail, training data used in the machine learning, and determination processing.

FIG. 3 is a descriptive diagram illustrating an example of the training data used in training for type determination performed by determiner 12, according to the present embodiment.

The training data illustrated in FIG. 3 is supervisory data in which a single item of content and a single item of type information are associated with each other.

For example, in supervisory data #1 illustrated in FIG. 3, content including an image showing a player playing soccer, and "sports" as the type of the content, are associated with each other.

In supervisory data #2, content including an image showing a singer singing at a concert, and "music" as the type of the content, are associated with each other.

In supervisory data #3, content including an image showing a speaker having a conversation, and "talkshow" as the type of the content, are associated with each other.

In addition to the three items of content specifically illustrated in FIG. 3, the supervisory data can include thousands to tens of thousands, or more, of other items of content. The type of the content is one type among a predetermined plurality of types. Here, a case where the predetermined plurality of types are three types, e.g., "sports", "music", and "talkshow", will be described as an example, but the types are not limited thereto.

When unknown content is input, the recognition model constructed through machine learning using the supervisory data illustrated in FIG. 3 outputs the type information indicating the type of the content based on the features of the image and the sound in that content.

The output type information may be (1) information that specifies which type the content is, among the predetermined plurality of types, or (2) information including the confidence level, which is the probability of the content being classified as each of the predetermined plurality of types.

FIG. 4 is a descriptive diagram illustrating the type determination performed by determiner 12 according to the present embodiment.

Content 31 illustrated in FIG. 4 is an example of the content obtained by obtainer 11. Content 31 is an image showing a player playing soccer, but is different from the image contained in the content of supervisory data #1 in FIG. 3.

Determiner 12 determines the type of content 31 by applying the determination processing to content 31. Two examples of the type information indicated as a result of the determination by determiner 12 are indicated in (a) and (b).
(a) in FIG. 4 is an example of type information specifying which type, among the predetermined plurality of types, the content is, and corresponds to (1) above.
   The type information illustrated in (a) in FIG. 4 indicates that content 31 is of the type "sports".
(b) in FIG. 4 is an example of type information including the confidence level, which is the probability of the content being classified as each of the predetermined plurality of types, and corresponds to (2) above.

The type information illustrated in (b) in FIG. 4 indicates that the type information of content 31 is "0.6/0.3/0.1" (i.e., the probabilities of being classified as "sports", "music", and "talkshow" are 0.6, 0.3, and 0.1, respectively; the same applies hereinafter).

Although the foregoing describes, as an example, a case where a probability (and more specifically, a numerical value in the range from 0 to 1) is used as the confidence level, the confidence level may be expressed as a binary value (e.g., 0 or 1) indicating a degree of agreement for each type.

FIG. 5 is a descriptive diagram illustrating an example of type information indicating results of past type determinations according to the present embodiment.

Calculator 14 calculates the type of the target content, along with the confidence level, based on the type information provided by determiner 12.

Storage 13 stores the type information determined by determiner 12 for past content. Calculator 14 obtains, from among the type information stored in storage 13, the type information of the content associated with a time that precedes the time associated with the target content by a predetermined amount of time.

For example, when using one item of the reference content, estimation device 10 calculates the confidence level information of the target content as follows. That is, when the time associated with the target content is "February 2, 2020 19:00", calculator 14 reads out, from storage 13, type information 41 of the content associated with a time "February 1, 2020 19:00", which is a predetermined amount of time (i.e., one day) before the stated time. Then, calculator 14 calculates, as the confidence level information of the target content, the average value of the type information of the target content (see FIG. 4) and type information 41 of the reference content, for each type.

In this example, the type information of the target content is "0.6/0.3/0.1" and the type information of the reference content is "0.7/0.2/0.1", and thus calculator 14 calculates the confidence level information of the target content as "0.65/0.25/0.1" by finding the average value for each type.

Additionally, for example, when using two items of the reference content, estimation device 10 calculates the confidence level information of the target content as follows. That is, type information 41 and 42 of the content is read out from storage 13, for the same target content as that mentioned above. Then, calculator 14 calculates, as the confidence level information of the target content, the average value of the type information of the target content (see FIG. 4) and type information 41 and 42 of the reference content, for each type.

In this example, calculator 14 calculates the confidence level information of the target content as "0.63/0.27/0.1" by finding the average value for each type.

FIG. 6 is a flowchart illustrating type determination processing by estimation device 10 according to the present embodiment.

In step S101, obtainer 11 obtains the target content. It is assumed that at this time, the type information of the reference content, with which is associated a second time that precedes the target content by a predetermined amount of time, is stored in storage 13. The type information of the reference content is, for example, stored as a result of the determination by determiner 12 (see step S102) when the sequence of processing illustrated in FIG. 6 has been executed before the execution of step S101.

In step S102, determiner 12 executes processing of determining the type of the target content obtained by obtainer 11 in step S102. As a result of the determination processing, determiner 12 provides, to calculator 14, the type information including the confidence level for each of the plurality of types related to the target content. Determiner 12 furthermore stores the stated type information in storage 13. The type information stored in storage 13 can be used as the type information of the reference content the next time the sequence of processing illustrated in FIG. 6 is executed (see step S103).

In step S103, calculator 14 reads out, from storage 13, the type information of the content (corresponding to the second content) that precedes the content obtained in step S101 by a predetermined amount of time.

In step S104, calculator 14 calculates the confidence level (corresponding to the confidence level information) for each type of the target content, from the type information of the target content calculated in step S102 and the type information of the reference content read out in step S103.

In step S105, outputter 15 determines whether at least one confidence level included in the confidence level information calculated by calculator 14 in step S104 is at least a threshold. If it is determined that at least one is at least the threshold (Yes in step S105), the sequence moves to step S106, and if not (No in step S105), the sequence moves to step S107.

In step S106, outputter 15 generates specifying information indicating the type, among the types included in the confidence level information, that has the maximum confidence level.

In step S107, outputter 15 generates specifying information indicating the default type.

In step S108, outputter 15 outputs the specifying information generated in step S106 or S107.

Through the sequence of processing illustrated in FIG. 6, estimation device 10 can suppress errors when estimating the type of content.

### [Embodiment 2]

The present embodiment will describe a configuration, different from that in Embodiment 1, of an estimation device that suppresses errors in the estimation of a type of content. Note that constituent elements that are the same as those in Embodiment 1 will be given the same reference signs as in Embodiment 1, and will not be described in detail.

FIG. 7 is a block diagram illustrating the functional configuration of estimation device 10A according to the present embodiment.

As illustrated in FIG. 7, estimation device 10A includes obtainer 11, determiners 12 and 22, storage 13 and 23, calculators 14 and 24, and outputter 15A. Note that the functional units of estimation device 10A can be realized by a Central Processing Unit (CPU) executing a predetermined program using memory.

Obtainer 11 is a functional unit that obtains content, like obtainer 11 in Embodiment 1. Obtainer 11 provides the obtained content to determiner 12 and determiner 22.

Determiner 12 is a functional unit that performs processing for determining the type of the content (corresponding to first processing). Determiner 12 corresponds to a first determiner. The first processing is processing for determining the type of the content using a recognition model constructed using machine learning (processing using what is known as AI). Determiner 12 holds recognition model 16 constructed through appropriate machine learning, and takes, as a determination result, type information of the content obtained by obtainer 11, the type information being output when the content is input to recognition model 16. The same descriptions as those given in Embodiment 1 apply to recognition model 16.

Storage 13 is a storage device that temporarily stores type information, like storage 13 in Embodiment 1.

Calculator 14 is a functional unit that calculates confidence level information of the first type information using the first type information and the second type information, like calculator 14 in Embodiment 1. Calculator 14 provides the calculated confidence level information to outputter 15A.

Determiner 22 is a functional unit that performs processing for determining the type of the content (corresponding to second processing). By applying the second processing to each of the target content and the reference content, determiner 22 obtains third type information indicating the type of the target content, and fourth type information indicating the type of the reference content. Determiner 22 corresponds to a second determiner. The second processing is processing different from the first processing executed by determiner 12, and is processing for obtaining type information by analyzing features of the content (i.e., features such as video, sound, metadata, and the like). Determiner 22 includes analyzer 26 for executing the second processing.

Analyzer 26 is a functional unit that determines the type of the content by analyzing the content. Analyzer 26 executes processing for analyzing features in video data, sound data, and metadata of the content. Specifically, analyzer 26 executes at least one of processing of detecting a line of sight of a person included in the video of the content, processing of detecting motion of an object included in the video of the content, processing of detecting a specific sound included in the sound of the content, and processing of detecting a pattern of an object included in the video of the content. Well-known image recognition techniques and sound recognition techniques (voice recognition techniques) can be used in the analysis of the video data and the sound data. Analyzer 26 determines the type of the content based on predetermined information or data being detected in the video, sound, or metadata of the content. Furthermore, analyzer 26 may use determination processing for determining, for each of a plurality of types of content, whether a condition indicating that the content does not correspond to the type in question (called an exclusion condition) is satisfied. Through this, the estimation device can more easily suppress errors when estimating the type of the content by using a condition that the content does not correspond to a given type. The specific processing will be described later.

Storage 23 is a storage device that temporarily stores type information. Storage 23 stores type information indicating the result of the determination by determiner 22, which includes the second type information of the reference content. The identification information stored in storage 23 and the identification information stored in storage 13 are the same in that both are identification information indicating the reference content, but are different in that one is determined by determiner 12 and the other by determiner 22. The second type information stored in storage 23 is read out by calculator 24.

Calculator 24 is a functional unit that calculates confidence level information of the first type information using the first type information and the second type information. Calculator 24 obtains the first type information of the target content from determiner 22, and obtains the second type information of the reference content from storage 23. Calculator 24 then calculates the confidence level information of the first type information using the first type information and the second type information. Here, the confidence level information is an indicator of how reliable the first type information calculated by calculator 24 is as information indicating the type of the content obtained by obtainer 11.

Outputter 15A is a functional unit that outputs the estimation result for the target content, like outputter 15 in Embodiment 1. Specifically, outputter 15A outputs specifying information specifying the type of the target content derived from at least one of the first type information and the third type information, using the confidence level information calculated by calculator 14 and the confidence level information calculated by calculator 24.

Note that outputter 15A may, using the confidence level information calculated by calculator 14 and the confidence level information calculated by calculator 24, output specifying information indicating the default type when the confidence level of both the first type information and the third type information is low.

FIG. 8 is a descriptive diagram illustrating an example of features used in the type determination performed by determiner 22 according to the present embodiment.

FIG. 8 illustrates features that can be detected in the video or the sound of the content, for each of a plurality of types of content. By using analyzer 26 to analyze the video or the sound of the target content, determiner 22 determines, when a feature indicated in FIG. 8 is detected, that the type of the target content is the type corresponding to the detected feature.

As illustrated in FIG. 8, for example, determiner 22 can determine that the content is the sports type when a feature of relatively fast motion, i.e., a feature that a motion vector between temporally consecutive images is relatively large, is detected by analyzer 26 as a feature pertaining to motion vectors.

Additionally, determiner 22 can determine that the content is the sports type when an image pattern indicating a uniform is detected by analyzer 26 as a feature pertaining to patterns in the image.

Additionally, determiner 22 can determine that the content is the music type when a musical pattern (a predetermined rhythm, a predetermined melody) is detected by analyzer 26 as a feature pertaining to patterns in the sound.

Additionally, determiner 22 can determine that the content is the music type when an image pattern indicating a musical instrument is detected by analyzer 26 as a feature pertaining to patterns in the image.

Additionally, determiner 22 can determine that the content is the talkshow type when the line of sight of a person who is a speaker in the content being directed at the camera (i.e., that the speaker is looking at the camera) is detected by analyzer 26 as a feature pertaining to the line of sight.

Additionally, determiner 22 can determine that the content is the talkshow type when a feature of almost no motion, i.e., a feature that a motion vector between temporally consecutive images is extremely small, is detected by analyzer 26 as a feature pertaining to motion vectors.

FIG. 9 is a descriptive diagram illustrating an example of conditions used in the type determination performed by determiner 22 according to the present embodiment. The conditions illustrated in FIG. 9 are examples of exclusion conditions indicating, for each of a plurality of types of content, that the content does not correspond to the type in question.

As illustrated in FIG. 9, for example, determiner 22 can determine that the content is not the sports type when both a feature that motion is not detected is not detected as the feature pertaining to motion vectors and an image pattern indicating a uniform is not detected as a feature pertaining to patterns in the image.

Additionally, determiner 22 can determine that the content is not the music type when sound is not detected as a feature of patterns indicated by the sound.

Additionally, determiner 22 can determine that the content is not the talkshow type when both the speaker is not detected to be looking at the camera as the feature pertaining to the line of sight and vigorous motion is detected as the feature pertaining to motion vectors.

FIG. 10 is a flowchart illustrating processing executed by estimation device 10A according to the present embodiment.

As illustrated in FIG. 10, in step S201, determiner 12 obtains the type information (the first type information and the second type information). The processing of step S201 corresponds to the processing of steps S101 and S102 in FIG. 6.

In step S202, calculator 14 calculates the confidence level information of the content. The processing of step S202 corresponds to the processing of steps S103 and S104 in FIG. 6.

In step S203, determiner 22 obtains the type information (the third type information and the fourth type information). The processing of step S203 corresponds to determiner 22 executing the processing of steps S101 and S102 in FIG. 6.

In step S204, calculator 24 obtains the confidence level information of the content. The processing of step S204 corresponds to calculator 24 executing the processing of steps S103 and S104 in FIG. 6.

In step S205, outputter 15A determines whether at least one of the confidence level included in the confidence level information calculated by calculator 14 in step S202 and the confidence level included in the confidence level information calculated by calculator 24 in step S204 is at least a threshold. If it is determined that at least one is at least the threshold (Yes in step S205), the sequence moves to step S206, and if not (No in step S205), the sequence moves to step S207.

In step S206, outputter 15A generates specifying information indicating the type, among the types included in the confidence level information, that has the maximum confidence level.

In step S207, outputter 15A generates specifying information indicating that the content does not correspond to any of the predetermined plurality of types.

In step S208, outputter 15A outputs the specifying information generated in step S206 or S207.

Through the sequence of processing illustrated in FIG. 10, estimation device 10A can suppress errors when estimating the type of the content by making both a determination using a recognition model and a determination using analysis, and then estimating the content based on the result having the higher confidence level.

### [Embodiment 3]

The present embodiment will describe a configuration, different from that in Embodiments 1 and 2, of an estimation device that suppresses errors in the estimation of a type of content. Note that constituent elements that are the same as those in Embodiment 1 will be given the same reference signs as in Embodiment 1, and will not be described in detail.

FIG. 11 is a block diagram illustrating the functional configuration of estimation device 10B according to the present embodiment.

As illustrated in FIG. 11, estimation device 10B includes obtainer 11, determiner 12, storage 13, calculator 14A, outputter 15, and analyzer 27. Note that the functional units of estimation device 10B can be realized by a Central Processing Unit (CPU) executing a predetermined program using memory.

Obtainer 11 is a functional unit that obtains content, like obtainer 11 in Embodiment 1. Obtainer 11 provides the obtained content to determiner 12 and analyzer 27.

Determiner 12 is a functional unit that performs processing for determining the type of the content (corresponding to first processing). Determiner 12 corresponds to the first determiner. The first processing is processing for determining the type of the content using a recognition model constructed using machine learning (processing using what is known as AI). Determiner 12 holds recognition model 16 constructed through appropriate machine learning, and takes, as a determination result, type information of the content obtained by obtainer 11, the type information being output when the content is input to recognition model 16. The same descriptions as those given in Embodiment 1 apply to recognition model 16.

Storage 13 is a storage device that temporarily stores type information, like storage 13 in Embodiment 1.

Calculator 14A is a functional unit that calculates confidence level information of the first type information using the first type information and the second type information, like calculator 14 in Embodiment 1. When calculating the confidence level information of the first type information, calculator 14A calculates the confidence level information while taking into account an analysis result from analyzer 27. Calculator 14A provides the calculated confidence level information to outputter 15.

Specifically, calculator 14A may adjust the confidence level based on a similarity of image information between the target content and the reference content. Specifically, calculator 14A obtains a degree of similarity of the color (pixel value), position, spatial frequency of the color (pixel value) (i.e., the frequency when the pixel value is taken as a wave on the spatial axis), luminance, or saturation of the image, between the target content and the reference content, as analyzed by analyzer 27. The confidence level may be increased when the obtained degree of similarity is at least a predetermined value.

Additionally, calculator 14A may adjust the confidence level by using the metadata of the target content, or by comparing the metadata of the target content and the reference content. Specifically, calculator 14A may increase the confidence level information of a type that matches television program information included in the metadata, in the calculated type information of the target content. For example, when the calculated type information of the target content is "0.6/0.3/0.1", and the television program information is "live baseball game", the confidence level of the sports type may be doubled, i.e., to "1.2/0.3/0.1".

Outputter 15 is a functional unit that outputs the estimation result for the target content, like outputter 15 in Embodiment 1.

Analyzer 27 is a functional unit that determines the type of the content by analyzing the video, sound, metadata, and the like of the content. Specifically, analyzer 27 executes processing of analyzing features of the video, sound, and metadata of the content, and provides an analysis result to calculator 14A. The processing of analyzing the video of the content can include analysis of the degree of similarity of the color (pixel value), position, spatial frequency of the color (pixel value), luminance, or saturation of the image. The processing of analyzing the video of the content can include detecting a scene switch.

The type determination processing by estimation device 10B is similar to the type determination processing by estimation device 10 in Embodiment 1, and will therefore not be described in detail. The type determination processing by estimation device 10B differs from the type determination processing by estimation device 10 in that the above-described processing is included in the processing involved in the calculation of the confidence level in step S104 (see FIG. 6).

Note that determiner 22 may perform control for prohibiting the execution of the first processing by determiner 12 in accordance with the features of the content analyzed in the second processing. For example, determiner 22 may perform control such that the first processing is not executed by determiner 12, i.e., is prohibited, when a feature that the framerate of the content is 24 fps or a feature that the sound of the content is in Dolby audio (5.1 ch) is detected. In this case, determiner 22 may further generate type information indicating that the type of the content is "movie".

### [Variation on Embodiment 3]

The present variation will describe a configuration, different from that in Embodiments 1, 2, and 3, of an estimation device that suppresses errors in the estimation of a type of content. Note that constituent elements that are the same as those in Embodiment 1 will be given the same reference signs as in Embodiment 1, and will not be described in detail.

FIG. 12 is a descriptive diagram illustrating transitions related to type changes according to the present variation. FIG. 12 is a graph in which the vertical axis represents the sound range (audible sound range) and the horizontal axis represents the number of sound channels, with each type of content corresponding to a vertex and transitions between types corresponding to edges. Here, "transition" refers to the specifying information output by outputter 15 changing from the specifying information output the previous time to specifying information that has been newly determined.

In the estimation device of the present variation, when outputter 15 determines the specifying information, the specifying information is determined taking into account the specifying information output the previous time and the like, and the determined specifying information is then output.

Examples of transitions of types specified by the specifying information will be described with reference to FIG. 12.

For example, when the specifying information output the previous time indicated the default type, if type information having a high confidence level and indicating the sports type and the music type is obtained from determiner 12 and calculator 14, outputter 15 transitions to the music type. Similarly, when the specifying information output the previous time indicated the default type, if type information having a high confidence level and indicating the talkshow type is obtained, the type transitions to the talkshow type. When the specifying information output the previous time indicated the default type, if the confidence level obtained from calculator 14 is relatively low, the type is kept as the default type.

Additionally, when the specifying information output the previous time indicated the sports type, if type information having a high confidence level and indicating the music type is obtained from determiner 12 and calculator 14, outputter 15 transitions to the music type. Similarly, when the specifying information output the previous time indicated the sports type, if type information having a high confidence level and indicating the talkshow type is obtained from determiner 12 and calculator 14, or if the confidence level obtained from calculator 14 is relatively low, the type transitions to the default type. When the specifying information output the previous time indicated the sports type, if type information having a high confidence level and indicating the sports type is obtained from determiner 12 and calculator 14, the type is kept as the sports type.

Additionally, when the specifying information output the previous time indicated the music type, if type information having a high confidence level and indicating the sports type is obtained from determiner 12 and calculator 14, outputter 15 transitions to the sports type. Similarly, when the specifying information output the previous time indicated the music type, if type information having a high confidence level and indicating the talkshow is obtained from determiner 12 and calculator 14, or if the confidence level obtained from calculator 14 is relatively low, the type transitions to the default type. Additionally, when the specifying information output the previous time indicated the music type, if type information having a high confidence level and indicating the music type is obtained from determiner 12 and calculator 14, the type is kept as the music type.

Similarly, when the specifying information output the previous time indicated the talkshow type, if type information having a high confidence level and indicating the sports type or the music type is obtained from determiner 12 and calculator 14, or if the confidence level obtained from calculator 14 is relatively low, outputter 15 transitions to the default type. Similarly, when the specifying information output the previous time indicated the talkshow type, if type information indicating the talkshow type is obtained from determiner 12 and calculator 14, the type is kept as the talkshow type.

The processing by outputter 15 according to the present variation will be described in detail hereinafter.

FIG. 13 is a first flowchart illustrating processing executed by outputter 15 according to the present variation. The processing illustrated in FIG. 13 corresponds to the processing within the broken line box SA in FIG. 6, i.e., the processing from steps S105 to S108.

In step S301, outputter 15 causes the processing to branch according to the specifying information output the previous time. Step S302 is executed when the specifying information output the previous time indicates the default type, step S303 is executed when the specifying information output the previous time indicates the sports type, step S304 is executed when the specifying information output the previous time indicates the music type, and step S305 is executed when the specifying information output the previous time indicates the talkshow type.

In step S302, outputter 15 executes processing for transitioning from the default type to another type.

In step S303, outputter 15 executes processing for transitioning from the sports type to another type.

In step S304, outputter 15 executes processing for transitioning from the music type to another type.

In step S305, outputter 15 executes processing for transitioning from the talkshow type to another type.

In step S306, outputter 15 outputs the specifying information generated in steps S302 to S305.

Steps S302 to S305 will be described hereinafter in detail.

FIG. 14 is a second flowchart illustrating processing executed by outputter 15 according to the present variation. The processing illustrated in FIG. 14 is processing included in step S302, and is processing executed by outputter 15 when the specifying information output by outputter 15 the previous time was the default type.

In step S311, outputter 15 determines whether at least one confidence level included in the confidence level information calculated by calculator 14 in step S104 is at least a threshold. If it is determined that at least one is at least the threshold (Yes in step S311), the sequence moves to step S312, and if not (No in step S311), the sequence moves to step S322.

In step S312, outputter 15 determines whether an exclusion condition (see FIG. 9) is satisfied for the confidence level information calculated by calculator 14 in step S104. If it is determined that the exclusion condition is satisfied (Yes in step S312), the sequence moves to step S322, and if not (No in step S312), the sequence moves to step S313.

In step S313, outputter 15 determines whether a scene switch has occurred. Whether a scene switch has occurred can be determined from the analysis result from analyzer 27. If a scene switch has occurred (Yes in step S313), the sequence moves to step S315, and if not (No in step S313), the sequence moves to step S314.

In step S314, outputter 15 determines whether a counter is at least a setting value. If it is determined that the counter is at least the setting value (Yes in step S314), the sequence moves to step S315, and if not (No in step S314), the sequence moves to step S321.

In step S315, outputter 15 sets the type to "music" or "talkshow". At this time, when the type obtained as a result of the determination by determiner 12 is "music" or "sports", outputter 15 sets the type to "music", whereas when the type obtained as a result of the determination by determiner 12 is "default", outputter 15 sets the type to "default".

In step S321, outputter 15 executes processing for incrementing the counter. Here, the processing for incrementing the counter is processing for counting the number of times the processing this step is executed consecutively each time the sequence of processing illustrated in this diagram is repeatedly executed. When this step is reached for the first time, the counter value is reset to 1, and if this step is also reached in the next sequence of processing, 1 is added to the counter value, for a value of 2. The same applies thereafter.

In step S322, outputter 15 sets the type to "default".

Once the processing of step S315 or S322 ends, the sequence moves to step S106 (FIG. 13).

FIG. 15 is a third flowchart illustrating processing executed by outputter 15 according to the present variation. The processing illustrated in FIG. 15 is processing included in step S303, and is processing executed by outputter 15 when the specifying information output by outputter 15 the previous time was the sports type.

In step S331, outputter 15 determines whether the type of the determination result from determiner 12 is "sports". If the type is determined to be "sports" (Yes in step S331), the sequence moves to step S332, and if not (No in step S331), the sequence moves to step S341.

In step S332, outputter 15 determines whether at least one confidence level included in the confidence level information calculated by calculator 14 in step S104 is at least a threshold. If it is determined that at least one is at least the threshold (Yes in step S332), the sequence moves to step S333, and if not (No in step S332), the sequence moves to step S351.

In step S333, outputter 15 determines whether an exclusion condition (see FIG. 9) is satisfied for the confidence level information calculated by calculator 14 in step S104. If it is determined that the exclusion condition is satisfied (Yes in step S333), the sequence moves to step S351, and if not (No in step S333), the sequence moves to step S334.

In step S334, outputter 15 sets the type to "sports".

In step S341, outputter 15 determines whether the type of the determination result from determiner 12 is "music". If the type is determined to be "music" (Yes in step S341), the sequence moves to step S342, and if not (No in step S341), the sequence moves to step S351.

In step S342, outputter 15 determines whether at least one confidence level included in the confidence level information calculated by calculator 14 in step S104 is at least a threshold. If it is determined that at least one is at least the threshold (Yes in step S342), the sequence moves to step S343, and if not (No in step S342), the sequence moves to step S351.

In step S343, outputter 15 sets the type to "music".

In step S351, outputter 15 determines whether a scene switch has occurred. Whether a scene switch has occurred can be determined from the analysis result from analyzer 27. If a scene switch has occurred (Yes in step S351), the sequence moves to step S354, and if not (No in step S351), the sequence moves to step S352.

In step S352, outputter 15 determines whether the counter is at least a setting value. If it is determined that the counter is at least the setting value (Yes in step S352), the sequence moves to step S354, and if not (No in step S352), the sequence moves to step S353.

In step S353, outputter 15 executes processing for incrementing the counter.

In step S354, outputter 15 sets the type to "default".

Once the processing of step S334, S354, or S343 ends, the sequence moves to step S106 (FIG. 13).

FIG. 16 is a fourth flowchart illustrating processing executed by outputter 15 according to the present variation. The processing illustrated in FIG. 16 is processing included in step S304, and is processing executed by outputter 15 when the specifying information output by outputter 15 the previous time was the music type.

In step S361, outputter 15 determines whether the type of the determination result from determiner 12 is "music". If the type is determined to be "music" (Yes in step S361), the sequence moves to step S362, and if not (No in step S361), the sequence moves to step S371.

In step S362, outputter 15 determines whether at least one confidence level included in the confidence level information calculated by calculator 14 in step S104 is at least a threshold. If it is determined that at least one is at least the threshold (Yes in step S362), the sequence moves to step S363, and if not (No in step S362), the sequence moves to step S381.

In step S363, outputter 15 sets the type to "music".

In step S371, outputter 15 determines whether the type of the determination result from determiner 12 is "sports". If the type is determined to be "sports" (Yes in step S371), the sequence moves to step S372, and if not (No in step S371), the sequence moves to step S381.

In step S372, outputter 15 determines whether at least one confidence level included in the confidence level information calculated by calculator 14 in step S104 is at least a threshold. If it is determined that at least one is at least the threshold (Yes in step S372), the sequence moves to step S373, and if not (No in step S372), the sequence moves to step S381.

In step S373, outputter 15 determines whether an exclusion condition (see FIG. 9) is satisfied for the confidence level information calculated by calculator 14 in step S104. If it is determined that the exclusion condition is satisfied (Yes in step S373), the sequence moves to step S381, and if not (No in step S373), the sequence moves to step S374.

In step S374, outputter 15 determines whether a scene switch has occurred. Whether a scene switch has occurred can be determined from the analysis result from analyzer 27. If a scene switch has occurred (Yes in step S374), the sequence moves to step S376, and if not (No in step S374), the sequence moves to step S375.

In step S375, outputter 15 determines whether the counter is at least a setting value. If it is determined that the counter is at least the setting value (Yes in step S375), the sequence moves to step S376, and if not (No in step S375), the sequence moves to step S377.

In step S376, outputter 15 sets the type to "sports".

In step S377, outputter 15 executes processing for incrementing the counter.

In step S378, outputter 15 sets the type to "music".

In step S381, outputter 15 determines whether a scene switch has occurred. Whether a scene switch has occurred can be determined from the analysis result from analyzer 27. If a scene switch has occurred (Yes in step S381), the sequence moves to step S384, and if not (No in step S381), the sequence moves to step S382.

In step S382, outputter 15 determines whether the counter is at least a setting value. If it is determined that the counter is at least the setting value (Yes in step S382), the sequence moves to step S384, and if not (No in step S382), the sequence moves to step S383.

In step S383, outputter 15 executes processing for incrementing the counter.

In step S384, outputter 15 sets the type to "default".

Once the processing of step S363, S384, S376, or S378 ends, the sequence moves to step S106 (FIG. 13).

FIG. 17 is a fifth flowchart illustrating processing executed by outputter 15 according to the present variation. The processing illustrated in FIG. 17 is processing included in step S305, and is processing executed by outputter 15 when the specifying information output by outputter 15 the previous time was the talkshow type.

In step S401, outputter 15 determines whether the type of the determination result from determiner 12 is "talkshow". If the type is determined to be "talkshow" (Yes in step S401), the sequence moves to step S402, and if not (No in step S401), the sequence moves to step S411.

In step S402, outputter 15 determines whether at least one confidence level included in the confidence level information calculated by calculator 14 in step S104 is at least a threshold. If it is determined that at least one is at least the threshold (Yes in step S402), the sequence moves to step S403, and if not (No in step S402), the sequence moves to step S411.

In step S403, outputter 15 determines whether an exclusion condition (see FIG. 9) is satisfied for the confidence level information calculated by calculator 14 in step S104. If it is determined that the exclusion condition is satisfied (Yes in step S403), the sequence moves to step S411, and if not (No in step S403), the sequence moves to step S404.

In step S404, outputter 15 sets the type to "talkshow".

In step S411, outputter 15 determines whether a scene switch has occurred. Whether a scene switch has occurred can be determined from the analysis result from analyzer 27. If a scene switch has occurred (Yes in step S411), the sequence moves to step S414, and if not (No in step S411), the sequence moves to step S412.

In step S412, outputter 15 determines whether the counter is at least a setting value. If it is determined that the counter is at least the setting value (Yes in step S412), the sequence moves to step S414, and if not (No in step S412), the sequence moves to step S413.

In step S413, outputter 15 executes processing for incrementing the counter.

In step S414, outputter 15 sets the type to "default".

Once the processing of step S404 or S414 ends, the sequence moves to step S106 (FIG. 13).

Through the foregoing sequence of processing, outputter 15 transitions the type information as appropriate.

### [Variation on Embodiments]

FIG. 18 is a descriptive diagram illustrating the functional configuration of estimation system 2 according to a variation on the embodiments.

As illustrated in FIG. 18, estimation system 2 includes content server 50, estimation device 10D, and television receiver 51. The stated content server 50, estimation device 10D, and television receiver 51 are communicably connected over network N. Network N includes cell phone carrier networks, telephone line networks using telephone lines or optical fibers, LANs (including wired or wireless LANs), and networks in which a plurality of these networks are connected. Television receiver 51 corresponds to a presenting apparatus that presents content.

Content server 50 holds content for which the type is estimated by estimation system 2, and supplies the content to estimation device 10D over network N.

Estimation device 10D obtains the content from content server 50, and estimates which type of content, among a predetermined plurality of types, the obtained content is. Additionally, estimation device 10D provides information indicating a result of the estimation to television receiver 51 over network N. The functions of estimation device 10D are similar to those of the estimation devices according to the foregoing embodiments and variation.

Television receiver 51 obtains the content from content server 50 and presents video and sound of the obtained content through screen 6 and speaker 5. Television receiver 51 also obtains, from estimation device 10D, specifying information output as a result of estimating the type of the content, and controls the presentation of the content based on the obtained specifying information. For example, television receiver 51 changes an acoustic effect when presenting the content by controlling speaker 5 based on the obtained specifying information. This provides effects similar to those of the foregoing embodiments and variation.

As described thus far, the estimation device according to the foregoing embodiments and variations outputs information indicating the type of the first content as the estimation result, taking into account not only the type of the first content, for which the type of the content is to be estimated, but also the type of the second content, which is associated with a time preceding the time associated with the first content by a predetermined amount of time. Accordingly, errors in the estimation can be suppressed even when estimating the type of the first content only from the first content. In this manner, the estimation device of the present disclosure can suppress errors when estimating the type of content.

Additionally, the estimation device estimates the type of the first content using a confidence level calculated using an average value of the probabilities that the first content and the second content will be classified as each of a plurality of types. Through this, if a type which the first content has a high probability of being classified as is the same as a type which the second content has a high probability of being classified as are the same, a higher value is calculated as the confidence level for that type. As a result, the estimation device performs control such that a type which the first content and the second content both have a high probability of being classified as is the result of estimating the type of the first content. In this manner, the estimation device of the present disclosure can further suppress errors when estimating the type of content.

Additionally, by using a moving average for the second content (i.e., the plurality of items of content), the estimation device performs the control using a relatively new item of the second content, which makes it possible to improve the accuracy of estimating the type of the first content. In this manner, the estimation device of the present disclosure can further suppress errors when estimating the type of content.

Additionally, by using a weighted moving average for the second content (i.e., the plurality of items of content), the estimation device performs the control using a relatively new item of the second content and while increasing the weight of relatively new items, which makes it possible to improve the accuracy of estimating the type of the first content. In this manner, the estimation device of the present disclosure can further suppress errors when estimating the type of content. Note that a weighted average may be used in which the second content includes the first content having a greater weight for relatively new items of content.

Additionally, the estimation device outputs information indicating the type of the first content as the estimation result, taking into account the types of the first content and the second content as determined through the second processing in addition to the types of the first content and the second content as determined through the first processing. Accordingly, errors in the estimation can be suppressed even when estimating the type of the first content using only the first processing. In this manner, the estimation device of the present disclosure can suppress errors when estimating the type of content.

Additionally, the estimation device determines the type of the content using a determination of the type of the content made using a recognition model and a determination of the type of the content using an analysis of features of the content. Through this, the estimation device of the present disclosure can suppress errors when estimating the type of content.

Additionally, the estimation device determines the type of the content using at least one of processing of detecting a line of sight of a person included in the content, processing of detecting motion of an object included in the content, processing of detecting sound included in the content, and processing of detecting a pattern of an object included in the content, for the content subjected to the second processing. Through this, the estimation device of the present disclosure can more easily suppress errors when estimating the type of content.

The estimation device can also reduce the amount of information processing and power consumption of the CPU by not using the recognition model to determine the type of content when the content type is determined by analysis.

The foregoing embodiments and the like have been described as examples of the technique according to the present disclosure. The accompanying drawings and detailed descriptions have been provided to that end.

As such, the constituent elements indicated in the accompanying drawings and the detailed descriptions include not only constituent elements necessary to solve the technical problem, but also constituent elements not necessary to solve the problem but used to exemplify the above-described technique. Those unnecessary constituent elements being included in the accompanying drawings, the detailed description, and so on should therefore not be interpreted as meaning that the unnecessary constituent elements are in fact necessary.

Additionally, the foregoing embodiments are provided merely as examples of the technique according to the present disclosure, and thus many changes, substitutions, additions, omissions, and the like are possible within the scope of the claims or a scope equivalent thereto.

### [Industrial Applicability]

The present disclosure can be applied in an estimation device that estimates a type of content.

### [Reference Signs List]

1, 51 Television receiver
2 Estimation system
5 Speaker
6 Screen
10, 10A, 10B, 10D Estimation device
11 Obtainer
12, 22 Determiner
13, 23 Storage
14, 14A, 24 Calculator
15, 15A Outputter
16 Recognition model
26, 27 Analyzer
31 Content
41, 42 Type information
50 Content server
N Network

## Claims

1. An estimation device comprising:
an obtainer that obtains first content associated with a first time and second content associated with a second time, the second time preceding the first time by a predetermined amount of time;
a first determiner that, by applying first processing for determining a type of content to each of the first content and the second content, obtains first type information indicating a type of the first content and second type information indicating a type of the second content;
a first calculator that, using the first type information and the second type information, calculates confidence level information indicating a confidence level of the first type information; and
an outputter that, using the confidence level information calculated by the first calculator, outputs specifying information specifying the type of the first content derived from the first type information.

2. The estimation device according to claim 1,
wherein the first type information includes a first probability that is a probability of the first content being classified as a predetermined type,
the second type information includes a second probability that is a probability of the second content being classified as the predetermined type, and
the first calculator calculates the confidence level information which includes, as the confidence level, an average value of the first probability and the second probability.

3. The estimation device according to claim 2,
wherein the second content includes a plurality of items of content different from the first content, and
the first calculator calculates the confidence level information which includes, as the confidence level, a moving average value of (i) a probability of each of the plurality of items of content being classified as the predetermined type and (ii) the first probability.

4. The estimation device according to claim 2,
wherein the second content includes a plurality of items of content different from the first content, and
the first calculator calculates the confidence level information which includes, as the confidence level, a weighted moving average value of (i) a probability of each of the plurality of items of content being classified as the predetermined type and (ii) the first probability, the weighted moving average value having greater weights given to times associated with newer items of content among the plurality of items of content.

5. The estimation device according to any one of claims 1 to 4, further comprising:
a second determiner that, by applying second processing for determining a type of content to each of the first content and the second content, obtains third type information indicating the type of the first content and fourth type information indicating the type of the second content, the second processing being different from the first processing; and
a second calculator that, based on a relationship between the third type information and the fourth type information, calculates second confidence level information of the third type information,
wherein the outputter outputs the specifying information specifying the type of the first content derived from at least one of the first type information or the third type information, using first confidence level information that is the confidence level information calculated by the first calculator and the second confidence level information calculated by the second calculator.

6. The estimation device according to claim 5,
wherein the first processing includes processing of obtaining type information output by inputting content into a recognition model constructed by machine learning, and
the second processing includes processing of obtaining type information by analyzing a feature of content.

7. The estimation device according to claim 5 or 6,
wherein the second processing includes at least one of processing of detecting a line of sight of a person included in video of content subjected to the second processing, processing of detecting motion of an object included in video of content subjected to the second processing, processing of detecting a specific sound included in sound of content subjected to the second processing, or processing of detecting a pattern of an object included in video of content subjected to the second processing.

8. The estimation device according to any one of claims 5 to 7,
wherein the second determiner further performs control to prohibit the first processing from being executed by the first determiner in accordance with the feature of the content analyzed by the second processing.

9. An estimation method comprising:
obtaining first content associated with a first time;
obtaining, before the obtaining of the first content, second content associated with a second time, the second time preceding the first time by a predetermined amount of time;
obtaining first type information indicating a type of the first content by applying first processing for determining a type of content to the first content;
obtaining, before the obtaining of the first content, second type information indicating a type of the second content by applying the first processing to the second content;
calculating, using the first type information and the second type information, confidence level information indicating a confidence level of the first type information; and
outputting, using the confidence level information calculated in the calculating, specifying information specifying the type of the first content derived from the first type information.

10. An estimation system comprising a content server that holds content, an estimation device, and a presenting apparatus that presents the content,
wherein the estimation device includes:
an obtainer that obtains, over a communication line and from the content server, first content associated with a first time and second content associated with a second time, the second time preceding the first time by a predetermined amount of time;
a first determiner that, by applying first processing for determining a type of content to each of the first content and the second content, obtains first type information indicating a type of the first content and second type information indicating a type of the second content;
a first calculator that, using the first type information and the second type information, calculates confidence level information indicating a confidence level of the first type information; and
an outputter that, using the confidence level information calculated by the first calculator, outputs specifying information specifying the type of the first content derived from the first type information, and
the presenting apparatus obtains the specifying information over the communication line from the estimation device, and controls presenting of the content using the specifying information obtained.
